# EUROPÄISCHE PATENTSCHRIFT

(11) **EP 3 358 232 B1**
(45) Veröffentlichungstag und Bekanntmachung des Hinweises auf die Patenterteilung: **15.04.2020**
(21) Anmeldenummer: 18154274.7
(22) Anmeldetag: 30.01.2018
(51) Int. Cl.: F16K 31/06, F16K 27/04

(54) **VENTIL UND VERFAHREN ZUM HERSTELLEN EINES VENTILS**
VALVE AND METHOD FOR PRODUCING A VALVE
SOUPAPE ET PROCÉDÉ DE FABRICATION D'UNE SOUPAPE

(30) Priorität: 03.02.2017 DE 102017102184
(43) Veröffentlichungstag der Anmeldung: 08.08.2018
(73) Patentinhaber: SVM Schultz Verwaltungs-GmbH & Co. KG, 87700 Memmingen (DE)
(72) Erfinder: Mang, Helmut, 87700 Memmingen (DE); Schreiber, Florian, 89264 Weißenhorn (DE)
(74) Vertreter: Patentanwälte Olbricht, Buchold, Keulertz Partnerschaft mbB

(56) Entgegenhaltungen:
- DE-A1- 19 535 945
- DE-A1-102010 039 917
- US-A1- 2016 103 455

## Beschreibung

Die Erfindung betrifft ein Ventil, insbesondere ein Schieberventil, welches insbesondere in Automatikgetrieben von Kraftfahrzeugen eingesetzt werden kann. Die Erfindung betrifft des Weiteren ein Verfahren zum Herstellen eines solchen Ventils.

Ventile unterschiedlichster Art sind bekannt. Schieberventile können typischerweise zumindest zwei Zustände einnehmen und dabei selektiv Anschlüsse, beispielsweise einen Druckanschluss, einen Arbeitsanschluss und einen Tankanschluss, miteinander verbinden.

Dadurch kann ein Strom eines Fluids wie beispielsweise einer Flüssigkeit oder eines Gases gesteuert werden.

Das Dokument DE 195 35 945 A1 offenbart ein Magnetventil mit Anker, Stößel und Spule sowie ein Verfahren zur Herstellung eines solchen Magnetventils. Um das Magnetventil und das Verfahren so auszubilden, dass beim Einbau des Ventilteiles eventuell auftretende Schief- bzw. Schrägstellungen einwandfrei ausgeglichen werden können, ohne ein Hängenbleiben des Kolbens während des Einsatzes befürchten zu müssen, sind ein Ventilteil und ein Magnetteil vor dem Einbau relativ zueinander quer zur Achse des Magnetteiles beweglich miteinander verbunden.
Bei dem Magnetventil kann eine Schiefstellung des Ventilteiles dadurch ausgeglichen werden, dass der Ventilteil gegenüber dem Magnetteil leicht kippt.

Es ist eine Aufgabe der Erfindung, bekannte Ventile alternativ, beispielsweise leichter herstellbar auszuführen. Sie sind auch als Druckregelventile bekannt. Sie besitzen dann eine Vielzahl von Stellungen.

Dies wird erfindungsgemäß durch ein Ventil und ein Verfahren gemäß den jeweiligen Hauptansprüchen erreicht. Vorteilhafte Weiterbildungen können beispielsweise den jeweiligen Unteransprüchen entnommen werden.

Die Erfindung betrifft ein Ventil, insbesondere ein Schieberventil, mit einer Längsachse. Das Ventil weist ein Gehäuse, ein Ventilgehäuse und eine Schieberhülse, welche sich entlang der Längsachse erstreckt, auf.

Das Gehäuse weist zumindest eine Anlagefläche auf, an welcher die Schieberhülse anliegt.

Das Ventilgehäuse umschließt die Schieberhülse zumindest teilweise und ist mit der Schieberhülse zumindest in Richtung auf das Gehäuse zu schubfest verbunden.

Das Ventilgehäuse weist einen bezüglich der Längsachse radial außenliegenden Halterand auf.

Das Gehäuse weist mindestens ein Halteelement auf, welches den Halterand umgreift, so dass das Ventilgehäuse entlang der Längsachse unter elastischer Deformation des Ventilgehäuses auf das Gehäuse zu gespannt wird.

Mittels eines solchen Ventils ist es möglich, die Positionen von Gehäuse, Ventilgehäuse und Schieberhülse zueinander in besonders einfacher und zuverlässiger Weise festzulegen.

Das Gehäuse ist vorzugsweise aus Metall ausgebildet. Das Ventilgehäuse ist vorzugsweise aus Kunststoff ausgebildet. Die Schieberhülse ist vorzugsweise aus Metall ausgebildet. Derartige Materialien haben sich für typische Anwendungsfälle bewährt.

Bevorzugt weist das Gehäuse eine Fixierungsvertiefung für die Schieberhülse auf, wobei die Anlagefläche in der Fixierungsvertiefung angeordnet ist. Damit kann die Schieberhülse vorteilhaft stabilisiert werden.

Gemäß einer Ausführung umschließt das Ventilgehäuse die Schieberhülse vollständig. Es kann die Schieberhülse alternativ auch nur teilweise umschließen.

Bevorzugt ist das Ventilgehäuse formschlüssig mit der Schieberhülse verbunden. Dies ermöglicht eine einfach herzustellende und stabile Verbindung. Jedoch sind auch andere Verbindungsarten, insbesondere Materialschluss oder Kraftschluss, entsprechend anwendbar.

Gemäß einer Ausführung weist die Schieberhülse eine umfangsmäßig umlaufende außenseitige Nut auf, in welche ein komplementärer Wulst des Ventilgehäuses zum Ausbilden einer formschlüssigen Verbindung eingreift.

Gemäß einer Ausführung weist die Schieberhülse einen umfangsmäßig umlaufenden außenseitigen Wulst auf, welcher in eine komplementäre Nut des Ventilgehäuses zum Ausbilden einer formschlüssigen Verbindung eingreift.

Der Halterand ist vorzugsweise ringförmig ausgeführt. Dies ermöglicht ein einfaches Umgreifen des Halterands. Der Halterand kann auch Bestandteil eines scheibenförmigen Teils des Ventilgehäuses sein. Er kann radial als Überstand des Ventilgehäuses ausgeführt sein.

Die Halteelemente sind gemäß einer Ausführung als bezüglich der Längsachse radial einwärtsweisende Vorsprünge ausgebildet. Gemäß einer weiteren Ausführung ist das Halteelement als axial am Gehäuse vorstehender Ring ausgebildet.

Bevorzugt nehmen die Halteelemente einen Winkel von 40° bis 50°, insbesondere 45°, zur Längsachse ein. Damit kann in der Praxis eine gute Haltewirkung erreicht werden.

Der Halterand weist gemäß einer vorteilhaften Ausführung eine bezüglich der Längsachse schräge Kante auf, an welcher die Halteelemente anliegen. Dadurch kann ein Winkel, um welchen die Halteelemente gebogen werden, verkleinert werden.

Bevorzugt nimmt die schräge Kante des Halterands einen Winkel von 40° bis 50°, insbesondere 45°, zur Längsachse ein. Entsprechend weit können die Halteelemente vorteilhaft gebogen bzw. verstemmt werden.

Das/die Halteelement/e können vorteilhaft mit dem Halterand verstemmt sein. Dies ermöglicht eine einfache Herstellung bei zuverlässigem Halt.

Das Ventilgehäuse ist bevorzugt bezüglich der Längsachse axial im Bereich des Halterands elastisch deformierbar ausgebildet. Weiter bevorzugt ist das Ventilgehäuse bezüglich der Längsachse radial innenliegend zum Halterand elastisch deformierbar ausgebildet.

Dies kann beispielsweise durch eine geeignete Materialwahl und/oder durch eine geeignete Formgebung erreicht werden.

Vor der Deformation kann insbesondere ein Abstand bzw. Luftspalt des Ventilgehäuses zum Gehäuse vorgesehen sein, um Platz für die Deformation zu haben.

Das Ventilgehäuse weist eine dem Gehäuse zugewandte Stirnseite auf, welche aufgrund der elastischen Deformation aus einer quer zur Längsachse ausgerichteten Orientierung heraus verkippt ist.

Die Stirnseite kann insbesondere um weniger als 5°, insbesondere weniger als 3°, aus der quer zur Längsachse ausgerichteten Orientierung heraus verkippt sein.

Die Schieberhülse wird bevorzugt aufgrund der elastischen Deformation gegen die Anlagefläche gedrückt. Damit ist die Position der Schieberhülse relativ zum Gehäuse festgelegt.

In der Schieberhülse ist gemäß einer Ausführung ein gegen die Kraft einer Rückstellfeder beweglicher Steuerkolben angeordnet. Dies entspricht der typischen Ausführung eines Schieberventils.

Es sei jedoch darauf hingewiesen, dass die erfindungsgemäße Ausführung auch für andere Arten von Ventilen anwendbar ist.

Gemäß einer vorteilhaften Ausführung ist vorgesehen, dass das Gehäuse einen Elektromagneten als Antrieb für den Steuerkolben aufweist, die Anlagefläche an einem Magnetkern des Elektromagneten angeordnet ist und der Magnetkern im Bereich der Anlagefläche eine Durchdringungsbohrung aufweist, die eine mit einem Anker des Elektromagneten in Wirkverbindung stehende Ankerstange aufnimmt.

Dies entspricht einer typischen Ausführung eines elektromagnetisch betätigten Ventils.

Es sei jedoch darauf hingewiesen, dass die erfindungsgemäße Ausführung auch für andere Arten von Betätigungen anwendbar ist.

Die Erfindung betrifft ferner ein Verfahren zum Herstellen eines Ventils. Dabei kann es sich insbesondere um ein erfindungsgemäßes Ventil handeln, wobei auf alle hierin beschriebenen Ausführungen und Varianten zurückgegriffen werden kann.

Das Verfahren weist folgende Schritte auf:
- Bereitstellen eines Gehäuses, welches zumindest eine Anlagefläche und eine Anzahl von Halteelementen aufweist,
- Bereitstellen eines Ventilgehäuses, welches einen Halterand aufweist,
- Bereitstellen einer Schieberhülse, welche sich entlang einer Längsachse erstreckt,
- Anordnen der Schieberhülse, so dass die Schieberhülse an der Anlagefläche des Gehäuses anliegt,
- Anordnen des Ventilgehäuses, so dass es die Schieberhülse zumindest teilweise umschließt und mit der Schieberhülse verbunden ist, so dass das Ventilgehäuse zumindest gegen Verschiebung entlang der Längsachse auf das Gehäuse zu an der Schieberhülse gesperrt ist und dass der Halterand bezüglich der Längsachse radial außenliegend angeordnet ist,
- Umformen der Halteelemente, so dass sie den Halterand umgreifen, so dass das Ventilgehäuse entlang der Längsachse unter elastischer Deformation des Ventilgehäuses auf das Gehäuse zu gespannt wird.

Mittels eines solchen Verfahrens kann ein Ventil vorteilhaft hergestellt werden, wobei die weiter oben bereits erwähnten Vorteile erreicht werden können.

Erfindungsgemäß wird dabei eine dem Gehäuse zugewandte Stirnfläche des Ventilgehäuses zunächst mit einem Abstand bzw. Luftspalt zum Gehäuse angebracht, wobei erst bei der elastischen Deformation der Abstand bzw. Luftspalt zumindest teilweise verkleinert wird. Dies ermöglicht in vorteilhafter Weise das Vorsehen eines Raums für die elastische Deformation.

In diesem Zusammenhang wird insbesondere darauf hingewiesen, dass alle im Bezug auf die Vorrichtung beschriebenen Merkmale und Eigenschaften aber auch Verfahrensweisen sinngemäß auch bezüglich der Formulierung des erfindungsgemäßen Verfahrens übertragbar und im Sinne der Erfindung einsetzbar und als mitoffenbart gelten. Gleiches gilt auch in umgekehrter Richtung, das bedeutet nur im Bezug auf das Verfahren genannte bauliche, also vorrichtungsgemäße Merkmale können auch im Rahmen der Vorrichtungsansprüche berücksichtigt und beansprucht werden und zählen ebenfalls zur Offenbarung.

In der Zeichnung ist die Erfindung insbesondere in einem Ausführungsbeispiel schematisch dargestellt. Es zeigen:
- Fig. 1: Komponenten eines erfindungsgemäßen Ventils während der Herstellung,
- Fig. 2: ein Ventil gemäß der Erfindung.

In den Figuren sind gleiche oder einander entsprechende Elemente jeweils mit den gleichen Bezugszeichen bezeichnet und werden daher, sofern nicht zweckmäßig, nicht erneut beschrieben. Die in der gesamten Beschreibung enthaltenen Offenbarungen sind sinngemäß auf gleiche Teile mit gleichen Bezugszeichen bzw. gleichen Bauteilbezeichnungen übertragbar. Auch sind die in der Beschreibung gewählten Lageangaben, wie z.B. oben, unten, seitlich usw. auf die unmittelbar beschriebene sowie dargestellte Figur bezogen und sind bei einer Lageänderung sinngemäß auf die neue Lage zu übertragen. Weiterhin können auch Einzelmerkmale oder Merkmalskombinationen aus den gezeigten und beschriebenen unterschiedlichen Ausführungsbeispielen für sich eigenständige erfinderische oder erfindungsgemäße Lösungen darstellen.

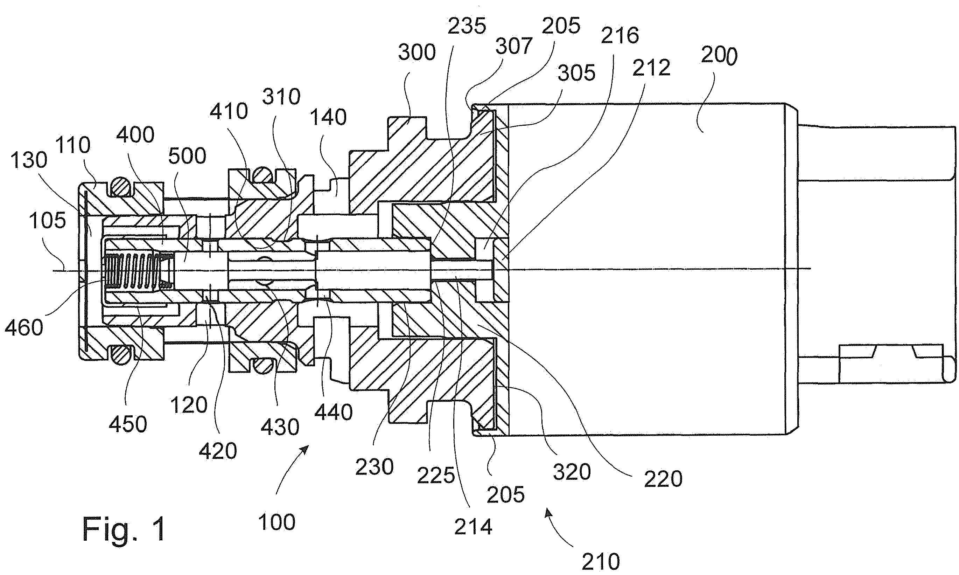

Figur 1 zeigt Komponenten eines Ventils 100 gemäß einem Ausführungsbeispiel der Erfindung während der Herstellung.

Das Ventil 100 erstreckt sich entlang einer Längsachse 105. Das Ventil 100 ist um die Längsachse 105 im Wesentlichen rotationssymmetrisch ausgebildet, wobei es Abweichungen von der Rotationssymmetrie gibt, beispielsweise bei Anschlüssen.

Das Ventil 100 weist ein Gehäuse 200 auf, welches in Figur 1 von außen dargestellt ist.

In dem Gehäuse 200 befindet sich ein Elektromagnet 210. Dieser ist in den Figuren nur partiell zu sehen, da er weitgehend vom Gehäuse 200 überdeckt wird.

Der Elektromagnet 210 weist einen Anker 212 auf. An diesem ist eine Ankerstange 214 angebracht. Der Anker 212 ist in einem Ankerraum 216 entlang der Längsachse 105 linear beweglich.

Zum Antreiben des Ankers 212 weist der Elektromagnet 210 eine Spule auf, welche in den Figuren vom Gehäuse 200 überdeckt wird und deshalb nicht zu sehen ist.

Der Elektromagnet 210 weist ferner einen Magnetkern 220 auf. Dieser ragt wie gezeigt etwas aus dem Gehäuse 200 heraus und verschließt das topfartige Gehäuse 200 in Richtung des Ventilgehäuses 300.

In dem Magnetkern 220 ist eine Fixierungsvertiefung 230 ausgebildet. Auf deren Funktion wird weiter unten eingegangen werden. In der Fixierungsvertiefung 230 ist eine Anlagefläche 235 ausgebildet, welche einen Boden der Fixierungsvertiefung 230 bildet.

In dem Magnetkern 220 ist des Weiteren eine Durchdringungsbohrung 225 ausgebildet, welche den Ankerraum 216 mit der Fixierungsvertiefung 230 verbindet. Die Ankerstange 214 erstreckt sich von dem Anker 212 durch die Durchdringungsbohrung 225.

Das Gehäuse 200 ist vorliegend aus Metall ausgebildet.

Das Ventil 100 weist ferner ein Ventilgehäuse 300 auf. Dieses ist vorliegend aus Kunststoff ausgebildet. Bevorzugt wird das Ventilgehäuse 300 als Kunststoffspritzgussteil hergestellt.

Außerdem weist das Ventil 100 eine Schieberhülse 400 auf. Diese ist vorliegend aus Metall ausgebildet.

Das Ventilgehäuse 300 umschließt die Schieberhülse 400. Die Schieberhülse 400 ist dabei so ausgerichtet, dass sie sich entlang der Längsachse 105 erstreckt.

Die Schieberhülse 400 ist in der bereits erwähnten Fixierungsvertiefung 230 aufgenommen und wird durch diese in Richtungen quer zur Längsachse 105 stabilisiert. Die Schieberhülse 400 liegt dabei an der Anlagefläche 235 an und wird durch die Anlagefläche 235 an einer Bewegung nach rechts gehindert.

In der Schieberhülse 400 ist außenseitig eine umfangsmäßig umlaufende Nut 410 ausgebildet. Komplementär dazu ist an dem Ventilgehäuse 300 ein Wulst 310 ausgebildet, welcher in die Nut 410 eingreift. Damit sind die Schieberhülse 400 und das Ventilgehäuse 300 formschlüssig miteinander verbunden. Insbesondere kann die Schieberhülse 400 relativ zum Ventilgehäuse 300 nicht mehr entlang der Längsachse 105 verschoben werden. Dies gilt in beide Richtungen entlang der Längsachse 105, insbesondere jedoch in Richtung auf das Gehäuse 200 zu. Es kann auch davon gesprochen werden, dass das Ventilgehäuse 300 gegen Verschiebung an der Schieberhülse 400 gesperrt ist.

Das Ventilgehäuse 300 weist eine Stirnseite 320 auf, welche zu dem Gehäuse 200 hinweist.

Radial außenseitig zur Stirnseite 320 weist das Ventilgehäuse 300 einen Halterand 305 auf. Dieser ist ringförmig ausgebildet. An seiner in den Figuren nach links weisenden Seite weist er eine schräge Kante 307 auf. Diese nimmt wie gezeigt zur Längsachse 105 einen Winkel von etwa 45° ein. Dies gilt im hier gezeigten Querschnitt, würde jedoch für jeden anderen Querschnitt, d.h. bei Rotation der Querschnittsfläche um die Längsachse 105 ebenso gelten.

Das Gehäuse 200 weist linksseitig eine Mehrzahl von Halteelementen 205 auf. Diese sind als vorstehende Elemente am Gehäuse 200 ausgebildet. Da in Figur 1 ein noch nicht vollständig zusammengebauter Zustand des Ventils 100 gezeigt ist, sind die Halteelemente 205 in einem horizontalen Zustand ausgerichtet. In der in Figur 1 dargestellten Querschnittsansicht sind zwei der Halteelemente 205 zu sehen.

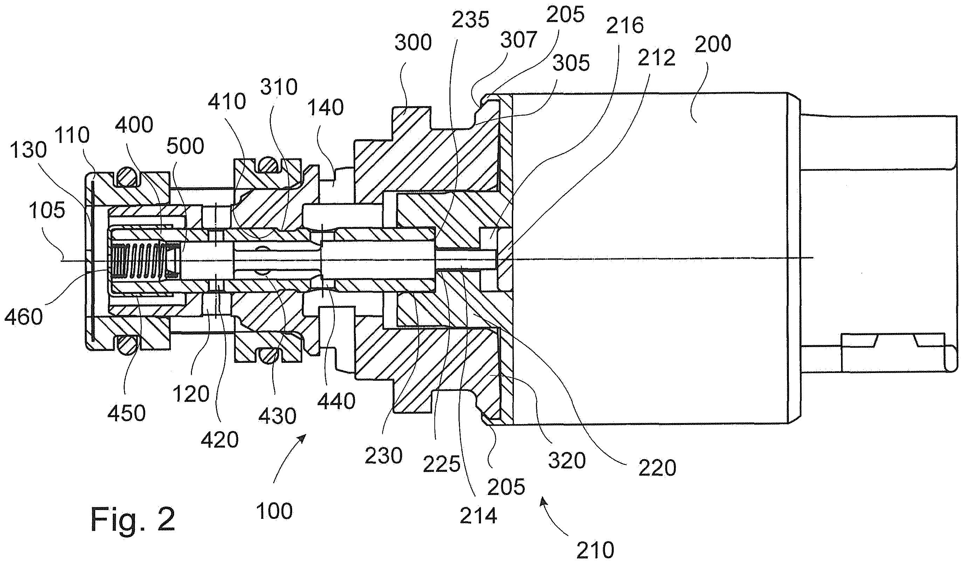

Die Halteelemente 205 können radial einwärts verstemmt werden, um dann mit der schrägen Kante 307 in Eingriff zu kommen und eine Verbindung zwischen dem Ventilgehäuse 300 und dem Gehäuse 200 herzustellen. Dies wird weiter unten mit Bezug auf Figur 2 beschrieben werden.

Das Ventil 100 weist einen Druckanschluss 120, einen Arbeitsanschluss 130 und einen Tankanschluss 140 auf.

Der Druckanschluss 120 ist radial seitlich am Ventil 100 ausgebildet. Er dient zum Zuführen eines unter Druck stehenden Fluids, welches mittels des Ventils 100 gesteuert werden soll. Bei dem Fluid kann es sich beispielsweise um ein Gas oder um eine Flüssigkeit handeln.

Der Arbeitsanschluss 130 ist stirnseitig ausgebildet. Er wird seitlich begrenzt von einem Filterkorb 110, welcher auf dem Ventilgehäuse 300 aufsitzt. Der Filterkorb 110 trägt einen Filter, mittels dessen aus dem Arbeitsanschluss 130 austretendes Fluid gefiltert werden kann. Auch für den Druckanschluss 120 ist ein Filter vorgesehen.

Das aus dem Arbeitsanschluss 130 austretende Fluid kann beispielsweise für diverse Steuerungs- oder Antriebszwecke verwendet werden, beispielsweise in einem Automatikgetriebe eines Kraftfahrzeugs.

Der Tankanschluss 140 ist wiederum radial seitlich am Ventil 100 ausgebildet. An ihn kann insbesondere eine zu einem Tank führende Leitung angeschlossen werden, so dass Fluid zum Tank zurückgeführt werden kann.

Der Arbeitsanschluss 130 ist mit einer Arbeitsanschlussöffnung 430 in der Schieberhülse 40 verbunden. Die Arbeitsanschlussöffnung 430 ist dabei teilweise von dem Steuerkolben 500 verdeckt. Die Verbindung von Arbeitsanschlussöffnung 430 und Arbeitsanschluss verläuft, bezogen auf die Längsachse 105, in axialer Richtung und ist relativ zu der Ansicht nach Fig. 1/ Fig.2 um 90° gedreht.

In der Schieberhülse 400 ist des Weiteren eine Druckanschlussöffnung 420 ausgebildet. Diese Druckanschlussöffnung 420 ist mit dem Druckanschluss 120 verbunden und sorgt dafür, dass das Fluid vom Druckanschluss 120 in das Innere der Schieberhülse 400 gelangt.

In der Schieberhülse 400 ist überdies eine Tankanschlussöffnung 440 ausgebildet, welche mit dem Tankanschluss 140 verbunden ist. Die Tankanschlussöffnung 440 sorgt dafür, dass Fluid aus dem Inneren der Schieberhülse 400 in den Tankanschluss 140 gelangt.

In der Schieberhülse 400 befindet sich die Arbeitsanschlussöffnung 430 zwischen der Tankanschlussöffnung 440 und der Druckanschlussöffnung 420.

Im Inneren der Schieberhülse 400 befindet sich ein Steuerkolben 500. Dieser ist wie gezeigt strukturiert ausgebildet, so dass er selektiv die Anschlüsse 120, 130, 140 miteinander verbinden kann. Es besitzt im mittleren Bereich eine Verjüngung zur Bildung eines Durchflußkanals. Begrenzt wird der Durchflußkanal von Steuerkanten des Steuerkolbens 500.

In der in Figur 1 gezeigten Stellung ist der Arbeitsanschluss 130 mit dem Tankanschluss 140 verbunden, während der Druckanschluss 120 gesperrt ist. Wird der Steuerkolben 500 mittels des Elektromagneten 210 nach links bewegt, so wird der Arbeitsanschluss 130 mit dem Druckanschluss 120 verbunden, während der Tankanschluss 140 gesperrt wird. Dies entspricht einer üblichen Funktionalität eines Ventils. Es handelt sich aufgrund der beschriebenen Ausführung somit vorliegend um ein Schieberventil. Es sei jedoch darauf hingewiesen, dass die erfindungsgemäße Ausführung nicht nur bei Schieberventilen, sondern bei allen Arten von Ventilen angewendet werden kann. Die Beschreibung im Kontext eines Schieberventils wird hier nur beispielhaft gegeben.

Am linken Ende der Schieberhülse 400 ist eine Abstützkappe 450 aufgebracht. Diese verschließt die Schieberhülse 400.

Zwischen der Abstützkappe 450 und dem Steuerkolben 500 ist eine Rückstellfeder 460 angeordnet. Diese stützt sich an der Abstützkappe 450 ab und drückt den Steuerkolben 500 nach rechts. Ohne Kraftbeaufschlagung durch den Elektromagneten 210 verbliebt somit der Steuerkolben 500 in der in Figur 1 dargestellten Position. Wird hingegen die bereits erwähnte Spule des Elektromagneten 210 mit Strom beaufschlagt, so wird der Anker 212 nach links bewegt. Über die Ankerstange 214 wird diese Bewegung auf den Steuerkolben 500 übertragen, welcher ebenfalls gegen die Kraft der Rückstellfeder 460 nach links bewegt wird. Dadurch kann das Ventil 100 in üblicher Weise betätigt werden.

Da das Ventil 100 im in Figur 1 dargestellten Zustand noch nicht fertig zusammengebaut ist, verbleibt ein erkennbarer Spalt zwischen der Stirnseite 320 und dem Gehäuse 200. Dieser dient dazu, einen Platz für eine Deformation des Ventilgehäuses 300 bereitzustellen, wie nachfolgend beschrieben wird.

Figur 2 zeigt das Ventil 100 in einem zusammengebauten Zustand. Im Unterschied zum in Figur 1 dargestellten Zustand wurden dabei die Halteelemente 205 radial einwärts geklappt, so dass sie an der schrägen Kante 307 des Ventilgehäuses 300 anliegen.

Mittels der Halteelemente 205 wird eine nach rechts gerichtete Kraft auf das Ventilgehäuse 300 ausgeübt. Diese führt dazu, dass sich das Ventilgehäuse 300 entlang der Stirnseite 320 radial außenseitig etwas nach rechts elastisch deformiert. Der Kunststoff, aus welchem das Ventilgehäuse 300 vorliegend ausgebildet ist, verfügt über die Eigenschaft, eine solche elastische Deformation zuzulassen. Der Platz ist, wie bereits weiter oben erwähnt, durch einen zunächst vorgesehenen Spalt vorhanden.

Es wird somit eine elastische Kraft auf das Ventilgehäuse 300 ausgeübt, welche insbesondere auch am Wulst 310, mit welchem das Ventilgehäuse 300 mit der Schieberhülse 400 verbunden ist, eine nach rechts gerichtete Kraft auf die Schieberhülse 400 ausübt.

Aufgrund dieser Kraft drückt auch die Schieberhülse 400 gegen die Anlagefläche 235 des Magnetkerns 220. Die Positionsbeziehungen von Gehäuse 200, Ventilgehäuse 300 und Schieberhülse 400 sind somit dauerhaft definiert.

Der Übergang von dem in Figur 1 gezeigten Zustand zu dem in Figur 2 gezeigten Zustand kann insbesondere durch Verstemmen erfolgen. Dabei werden die Halteelemente 205 nach innen umgebogen.

Nachfolgend werden mögliche Merkmale des Vorschlages strukturiert wiedergegeben. Die nachfolgenden strukturiert wiedergegebenen Merkmale können beliebig untereinander kombiniert werden und können in beliebiger Kombination in die Ansprüche der Anmeldung aufgenommen werden. Dem Fachmann ist klar, dass sich die Erfindung bereits aus dem Gegenstand mit den wenigsten Merkmalen ergibt. Insbesondere sind nachfolgend vorteilhafte oder mögliche Ausgestaltungen, nicht jedoch die einzig möglichen Ausgestaltungen der Erfindung wiedergegeben.

Es ist weiter zu beachten, dass die in den verschiedenen Ausführungsformen beschriebenen und in den Figuren gezeigten Ausgestaltungen und Varianten der Erfindung beliebig untereinander kombinierbar sind. Dabei sind einzelne oder mehrere Merkmale beliebig gegeneinander austauschbar. Diese Merkmalskombinationen sind ebenso mit offenbart.

Die in den abhängigen Ansprüchen angeführten Rückbeziehungen weisen auf die weitere Ausbildung des Gegenstandes des Hauptanspruches durch die Merkmale des jeweiligen Unteranspruches hin. Jedoch sind diese nicht als ein Verzicht auf die Erzielung eines selbständigen, gegenständlichen Schutzes für die Merkmale der rückbezogenen Unteransprüche zu verstehen.

Merkmale, die nur in der Beschreibung offenbart wurden oder auch Einzelmerkmale aus Ansprüchen, die eine Mehrzahl von Merkmalen umfassen, können jederzeit als von erfindungswesentlicher Bedeutung zur Abgrenzung vom Stande der Technik in den oder die unabhängigen Anspruch/Ansprüche übernommen werden, und zwar auch dann, wenn solche Merkmale im Zusammenhang mit anderen Merkmalen erwähnt wurden beziehungsweise im Zusammenhang mit anderen Merkmalen besonders günstige Ergebnisse erreichen.

## Patentansprüche

1. Ventil, insbesondere Schieberventil, mit einer Längsachse (105), aufweisend
- ein Gehäuse (200),
- ein Ventilgehäuse (300), und
- eine Schieberhülse (400), welche sich entlang der Längsachse (105) erstreckt,
- wobei das Gehäuse (200) zumindest eine Anlagefläche (235) aufweist, an welcher die Schieberhülse (400) anliegt,
- wobei das Ventilgehäuse (300) die Schieberhülse (400) zumindest teilweise umschließt und mit der Schieberhülse (400) zumindest in Richtung auf das Gehäuse (200) zu schubfest verbunden ist,
- wobei das Ventilgehäuse (300) einen bezüglich der Längsachse (105) radial außenliegenden Halterand (305) aufweist und
- wobei das Gehäuse (200) mindestens ein Halteelement (205) aufweist, welches den Halterand (305) umgreift, so dass das Ventilgehäuse (300) entlang der Längsachse (105) unter elastischer Deformation des Ventilgehäuses (300) auf das Gehäuse (200) zu gespannt wird, **dadurch gekennzeichnet, dass** das Ventilgehäuse (300) eine dem Gehäuse (200) zugewandte Stirnseite (320) aufweist, welche aufgrund der elastischen Deformation aus einer quer zur Längsachse (105) ausgerichteten Orientierung heraus verkippt ist.

2. Ventil nach Anspruch 1, **dadurch gekennzeichnet, dass** das Gehäuse (200) aus Metall ausgebildet ist, und/oder das Ventilgehäuse (300) aus Kunststoff ausgebildet ist, und/oder die Schieberhülse (400) aus Metall ausgebildet ist.

3. Ventil nach einem der vorhergehenden Ansprüche, **dadurch gekennzeichnet, dass** das Gehäuse (200) eine Fixierungsvertiefung (230) für die Schieberhülse (400) aufweist, wobei die Anlagefläche (235) in der Fixierungsvertiefung (230) angeordnet ist.

4. Ventil nach einem der vorhergehenden Ansprüche, **dadurch gekennzeichnet, dass** das Ventilgehäuse (300) die Schieberhülse (400) vollständig umschließt.

5. Ventil nach einem der vorhergehenden Ansprüche, **dadurch gekennzeichnet, dass** das Ventilgehäuse (300) formschlüssig mit der Schieberhülse (400) verbunden ist.

6. Ventil nach einem der vorhergehenden Ansprüche, **dadurch gekennzeichnet, dass** die Halteelemente (205) als bezüglich der Längsachse (105) radial einwärts weisende Vorsprünge ausgebildet sind oder das Halteelement (205) als axial am Gehäuse (200) vorstehender Ring ausgebildet ist.

7. Ventil nach einem der vorhergehenden Ansprüche, **dadurch gekennzeichnet, dass** die Halteelemente (205) einen Winkel von 40° bis 50°, insbesondere 45°, zur Längsachse (105) einnehmen.

8. Ventil nach einem der vorhergehenden Ansprüche, **dadurch gekennzeichnet, dass** der Halterand (305) eine bezüglich der Längsachse (105) schräge Kante (307) aufweist, an welcher die Halteelemente (205) anliegen.

9. Ventil nach Anspruch 8, **dadurch gekennzeichnet, dass** die schräge Kante (307) des Halterands (305) einen Winkel von 40° bis 50°, insbesondere 45°, zur Längsachse (105) einnimmt.

10. Ventil nach einem der vorhergehenden Ansprüche, **dadurch gekennzeichnet, dass** das/die Halteelement/e (205) mit dem Halterand (305) verstemmt ist/sind.

11. Ventil nach einem der vorhergehenden Ansprüche, **dadurch gekennzeichnet, dass** das Ventilgehäuse (300) bezüglich der Längsachse (105) axial im Bereich des Halterands (305) elastisch deformierbar ausgebildet ist.

12. Ventil nach einem der vorhergehenden Ansprüche, **dadurch gekennzeichnet, dass** das Ventilgehäuse (300) bezüglich der Längsachse (105) radial innenliegend zum Halterand (305) elastisch deformierbar ausgebildet ist.

13. Ventil nach einem der vorhergehenden Ansprüche, **dadurch gekennzeichnet, dass** die Schieberhülse (400) aufgrund der elastischen Deformation gegen die Anlagefläche (235) gedrückt wird.

14. Verfahren zum Herstellen eines Ventils, insbesondere nach einem der vorhergehenden Ansprüche, wobei das Verfahren folgende Schritte aufweist:
- Bereitstellen eines Gehäuses (200), welches zumindest eine Anlagefläche (235) und eine Anzahl von Halteelementen (205) aufweist,
- Bereitstellen eines Ventilgehäuses (300), welches einen Halterand (305) aufweist,
- Bereitstellen einer Schieberhülse (400), welche sich entlang einer Längsachse (105) erstreckt,
- Anordnen der Schieberhülse (400), so dass die Schieberhülse (400) an der Anlagefläche (235) des Gehäuses (200) anliegt,
- Anordnen des Ventilgehäuses (300), so dass es die Schieberhülse (400) zumindest teilweise umschließt und mit der Schieberhülse (400) verbunden ist, so dass das Ventilgehäuse (300)zumindest gegen Verschiebung entlang der Längsachse (105) auf das Gehäuse (200) zu an der Schieberhülse (400) gesperrt ist und dass der Halterand (305) bezüglich der Längsachse (105) radial außenliegend angeordnet ist,
- Umformen der Halteelemente (205), so dass sie den Halterand (305) umgreifen, so dass das Ventilgehäuse (300) entlang der Längsachse (105) unter elastischer Deformation des Ventilgehäuses (300) auf das Gehäuse (200) zu gespannt wird, **dadurch gekennzeichnet, dass** eine dem Gehäuse (200) zugewandte Stirnseite (320) des Ventilgehäuses (300) aufgrund der elastischen Deformation aus einer quer zur Längsachse (105) ausgerichteten Orientierung heraus verkippt wird.

## Claims

1. Valve, in particular a slide valve, having a longitudinal axis (105), comprising
- a housing (200),
- a valve housing (300), and
- a slide sleeve (400) which extends along the longitudinal axis (105),
- wherein the housing (200) has at least one bearing surface (235) against which the slide sleeve (400) bears,
- wherein the valve housing (300) at least partially encloses the slide sleeve (400) and is connected in a shear-resistant manner to the slide sleeve (400) at least in the direction towards the housing (200),
- wherein the valve housing (300) has a holding rim (305) situated radially outside with respect to the longitudinal axis (105), and
- wherein the housing (200) has at least one holding element (205) which engages around the holding rim (305) such that the valve housing (300) is tensioned towards the housing (200) along the longitudinal axis (105) with elastic deformation of the valve housing (300), **characterized in that** the valve housing (300) has an end side (320) which faces the housing (200) and which, by virtue of the elastic deformation, is tilted out of an orientation in which it is oriented transversely to the longitudinal axis (105) .

2. Valve according to Claim 1, **characterized in that** the housing (200) is formed from metal, and/or the valve housing (300) is formed from plastic, and/or the slide sleeve (400) is formed from metal.

3. Valve according to either of the preceding claims, **characterized in that** the housing (200) has a fixing depression (230) for the slide sleeve (400), wherein the bearing surface (235) is arranged in the fixing depression (230).

4. Valve according to one of the preceding claims, **characterized in that** the valve housing (300) completely encloses the slide sleeve (400).

5. Valve according to one of the preceding claims, **characterized in that** the valve housing (300) is connected to the slide sleeve (400) in a form-fitting manner.

6. Valve according to one of the preceding claims, **characterized in that** the holding elements (205) are designed as projections which point radially inwards with respect to the longitudinal axis (105), or the holding element (205) is designed as a ring projecting axially on the housing (200).

7. Valve according to one of the preceding claims, **characterized in that** the holding elements (205) assume an angle of 40° to 50°, in particular 45°, to the longitudinal axis (105).

8. Valve according to one of the preceding claims, **characterized in that** the holding rim (305) has an edge (307) which is slanted with respect to the longitudinal axis (105) and against which the holding elements (205) bear.

9. Valve according to Claim 8, **characterized in that** the slanted edge (307) of the holding rim (305) assumes an angle of 40° to 50°, in particular 45°, to the longitudinal axis (105).

10. Valve according to one of the preceding claims, **characterized in that** the holding element(s) (205) is/are caulked with the holding rim (305).

11. Valve according to one of the preceding claims, **characterized in that** the valve housing (300) is designed to be elastically deformable axially in the region of the holding rim (305) with respect to the longitudinal axis (105).

12. Valve according to one of the preceding claims, **characterized in that** the valve housing (300) is designed to be elastically deformable radially inwardly from the holding rim (305) with respect to the longitudinal axis (105).

13. Valve according to one of the preceding claims, **characterized in that** the slide sleeve (400) is pressed against the bearing surface (235) by virtue of the elastic deformation.

14. Method for producing a valve, in particular according to one of the preceding claims, wherein the method comprises the following steps:
- providing a housing (200) which has at least one bearing surface (235) and a number of holding elements (205),
- providing a valve housing (300) which has a holding rim (305),
- providing a slide sleeve (400) which extends along a longitudinal axis (105),
- arranging the slide sleeve (400) such that the slide sleeve (400) bears against the bearing surface (235) of the housing (200),
- arranging the valve housing (300) such that it at least partially encloses the slide sleeve (400) and is connected to the slide sleeve (400), with the result that the valve housing (300) is blocked on the slide sleeve (400) at least against displacement along the longitudinal axis (105) towards the housing (200) and that the holding rim (305) is arranged radially to the outside with respect to the longitudinal axis (105),
- forming the holding elements (205) such that they engage around the holding rim (305), with the result that the valve housing (300) is tensioned toward the housing (200) along the longitudinal axis (105) under elastic deformation of the valve housing (300), **characterized in that** an end side (320) of the valve housing (300) that faces the housing (200) is tilted, by virtue of the elastic deformation, out of an orientation in which it is oriented transversely to the longitudinal axis (105) .

## Revendications

1. Soupape, en particulier soupape à tiroir, dotée d'un axe longitudinal (105), comprenant
- un boîtier (200),
- un carter de soupape (300), et
- une douille coulissante (400), laquelle s'étend le long de l'axe longitudinal (105),
- dans laquelle le boîtier (200) comprend au moins une surface d'appui (235) contre laquelle la douille coulissante (400) s'appuie,
- dans laquelle le carter de soupape (300) entoure au moins partiellement la douille coulissante (400) et est relié à la douille coulissante (400) de manière résistante au cisaillement au moins en direction du boîtier (200),
- dans laquelle le carter de soupape (300) comprend un bord de retenue (305) situé radialement à l'extérieur par rapport à l'axe longitudinal (105) et
- dans laquelle le boîtier (200) comprend au moins un élément de retenue (205), lequel vient en prise autour du bord de retenue (305), de sorte que le carter de soupape (300) est serré vers le boîtier (200) par déformation élastique du carter de soupape (300) le long de l'axe longitudinal (105), **caractérisée en ce que** le carter de soupape (300) comprend un côté frontal (320) tourné vers le boîtier (200), lequel côté frontal est, en raison de la déformation élastique, incliné à partir d'une orientation orientée transversalement à l'axe longitudinal (105).

2. Soupape selon la revendication 1, **caractérisée en ce que** le boîtier (200) est réalisé à partir de métal, et/ou le carter de soupape (300) est réalisé à partir de matière synthétique, et/ou la douille coulissante (400) est réalisée à partir de métal.

3. Soupape selon l'une des revendications précédentes, **caractérisée en ce que** le boîtier (200) comprend un évidement de fixation (230) pour la douille coulissante (400), la surface d'appui (235) étant disposée dans l'évidement de fixation (230).

4. Soupape selon l'une des revendications précédentes, **caractérisée en ce que** le carter de soupape (300) entoure complètement la douille coulissante (400).

5. Soupape selon l'une des revendications précédentes, **caractérisée en ce que** le carter de soupape (300) est relié par complémentarité de forme à la douille coulissante (400).

6. Soupape selon l'une des revendications précédentes, **caractérisée en ce que** les éléments de retenue (205) sont réalisés sous forme de saillies tournées radialement vers l'intérieur par rapport à l'axe longitudinal (105) ou l'élément de retenue (205) est réalisé sous forme de bague faisant saillie axialement sur le boîtier (200).

7. Soupape selon l'une des revendications précédentes, **caractérisée en ce que** les éléments de retenue (205) forment un angle de 40° à 50°, en particulier de 45°, par rapport à l'axe longitudinal (105).

8. Soupape selon l'une des revendications précédentes, **caractérisée en ce que** le bord de retenue (305) comprend une arête inclinée (307) par rapport à l'axe longitudinal (105), contre laquelle les éléments de retenue (205) s'appuient.

9. Soupape selon la revendication 8, **caractérisée en ce que** l'arête inclinée (307) du bord de retenue (305) forme un angle de 40° à 50°, en particulier de 45°, par rapport à l'axe longitudinal (105).

10. Soupape selon l'une des revendications précédentes, **caractérisée en ce que** l'élément de retenue/les éléments de retenue (205) est/sont maté(s) avec le bord de retenue (305) .

11. Soupape selon l'une des revendications précédentes, **caractérisée en ce que** le carter de soupape (300) est réalisé de manière déformable élastiquement axialement par rapport à l'axe longitudinal (105) dans la région du bord de retenue (305).

12. Soupape selon l'une des revendications précédentes, **caractérisée en ce que** le carter de soupape (300) est réalisé de manière déformable élastiquement par rapport au bord de retenue (305) radialement à l'intérieur par rapport à l'axe longitudinal (105).

13. Soupape selon l'une des revendications précédentes, **caractérisée en ce que** la douille coulissante (400) est pressée contre la surface d'appui (235) en raison de la déformation élastique.

14. Procédé de fabrication d'une soupape, en particulier selon l'une des revendications précédentes, le procédé comprenant les étapes suivantes :
- fournir un boîtier (200), lequel comprend au moins une surface d'appui (235) et un certain nombre d'éléments de retenue (205),
- fournir un carter de soupape (300), lequel comprend un bord de retenue (305),
- fournir une douille coulissante (400), laquelle s'étend le long d'un axe longitudinal (105),
- disposer la douille coulissante (400), de sorte que la douille coulissante (400) s'appuie contre la surface d'appui (235) du boîtier (200),
- disposer le carter de soupape (300), de sorte qu'il entoure au moins partiellement la douille coulissante (400) et est relié à la douille coulissante (400), de sorte que le carter de soupape (300) est bloqué contre la douille coulissante (400) au moins de manière à empêcher un coulissement le long de l'axe longitudinal (105) vers le boîtier (200) et que le bord de retenue (305) est disposé radialement à l'extérieur par rapport à l'axe longitudinal (105),
- déformer les éléments de retenue (205), de sorte qu'ils viennent en prise autour du bord de retenue (305), de sorte que le carter de soupape (300) est serré vers le boîtier (200) par déformation élastique du carter de soupape (300) le long de l'axe longitudinal (105), **caractérisé en ce qu'**un côté frontal (320) du carter de soupape (300) tourné vers le boîtier (200) est, en raison de la déformation élastique, incliné à partir d'une orientation orientée transversalement à l'axe longitudinal (105).
